# EUROPEAN PATENT APPLICATION

(11) **EP 3 560 775 A1**
(43) Date of publication of application: **30.10.2019**
(21) Application number: 17887490.5
(22) Date of filing: 21.12.2017
(51) Int. Cl.: B60T 7/04, B60K 26/02, G05G 1/01, G05G 1/30

(54) **PEDAL APPARATUS**

(30) Priority: 26.12.2016 JP 2016250566
(71) Applicant: Tsunemi, Kazuo, Higashiosaka-shi, Osaka 5400035 (JP)
(72) Inventor: Tsunemi, Kazuo, Higashiosaka-shi, Osaka 5400035 (JP)
(74) Representative: Godlewski, Piotr
(86) International application number: PCT/JP2017/046050
(87) International publication number: WO 2018/123835

(57) **Abstract**

There is provided an inexpensive pedal device in a compact and simple configuration of the one-pedal scheme, wherein the pedal device may be attached to an existing brake pedal without remodeling the brake pedal, wherein the pedal device does not cause the pedal stepping surface to project toward a driver, wherein an accelerator and a brake are operable with the driver's right heel in contact with the floor, wherein upon braking the pedal device always operates toward a direction to close the accelerator, and wherein the pedal device allows some deviation of a pedal-stepping position. A pedal device, comprising: a frame consisting of a bracket attachable to an existing brake pedal, and a base projecting rightward from the bracket; an accelerator pad attached to an upper surface of the base so that the accelerator pad is smoothly slidable rightward and leftward through a slide mechanism provided on the upper surface of the base; and a transmission unit for transmitting a position of the accelerator pad to an accelerator device of a vehicle, wherein the base is sloped downward toward the bracket, wherein the accelerator pad is shaped so that its stepping surface is not higher than a stepping surface of the brake pedal when the accelerator pad is at its leftmost position, wherein the accelerator pad comprises a biasing unit for biasing the accelerator pad leftward, and wherein the base is provided on the bracket at an angle so that the right end of the base is closer to a driver.

## Description

### FIELD OF THE INVENTION

The present invention relates to a pedal device of so-called "one-pedal" scheme, which pedal device integrally equipped with a brake operation mechanism and an accelerator operation mechanism for an automobile; and more specifically, the present invention relates to a pedal device enabling brake and accelerator operations with a single pedal by removing an existing accelerator pedal (i.e., gas pedal) and subsequently attaching the accelerator pedal to an existing brake pedal to connect the brake pedal to the accelerator operation mechanism.

### BACKGROUND OF THE INVENTION

Pedal devices of so-called "one-pedal" scheme are known to have a brake pedal for being pressed on in a forward direction by a driver's foot and an accelerator operation mechanism integrally provided on the brake pedal, wherein the accelerator operation mechanism may be operated in a right or left direction by the front part of the driver's foot. With such a configuration, the driver no longer needs to switch between the brake pedal and the accelerator pedal to thereby reduce the braking distance by eliminating the free running time when emergency braking is needed as well as preventing runaway accidents caused by stepping on the wrong pedal.

Representative of such pedal devices are ones configured as disclosed in Patent Documents 1 and 2.

For example, a pedal device according to Patent Document 1 (hereinafter referred to as "Prior Art 1") has a brake pedal for stepping operation coupled with an auxiliary pedal, and an accelerator pad provided to the auxiliary pedal for lateral operation, wherein an accelerator mechanism is operated by the accelerator pad. Also, a pedal device according to Patent Document 2 (hereinafter referred to as "Prior Art 2") operates an accelerator mechanism by rotating an accelerator pedal rotatably and axially supported by a shank provided on a brake pedal.
Patent Document 1: Japanese Patent No.4249010 Publication
Patent Document 2: Japanese Patent No.5991257 Publication

However, in Prior Art 1, due to its configuration where its pedal device is attached directly above an existing brake pedal, the device (specifically, the pedal stepping surface) inevitability projects toward the driver's side, elevating the driver's knee position and producing space between the driver's seating surface and the lower side of the driver's thigh, to cause a persistent tendency that the driver's right foot weight falls on the pedal device. Accordingly, this device is unsuited to a prolonged drive due to the increased load to the driver's pedaling foot and/or leg in addition to the possibility that the driver may unintentionally performs the braking operation. Certainly, it is possible to modify the brake mechanism by removing not only the accelerator pedal, but also the existing brake pedal so that the pedal device will not project toward the driver's side, but such a modification may increase the device cost as well as causing a violation of law regarding modifications of important safety parts.

On the other hand, Prior Art 2 not only has a similar problem, but also has another problem in its inventive configuration itself that it is operated by mounting the entire foot sole on a rotatable accelerator pedal. In Patent Document 2, accumulation of ankle fatigue, caused by using a heel as a fulcrum to rotate the toe side outward and operate the accelerator pad, is regarded as a problem and it is described that the accumulation of foot fatigue may be partly prevented if the device is operable by inward and outward rotations of the entire foot sole. However, in reality, drivers generally operate by placing their respective heel on the floor and switch pedals to step on. This is not only because drivers are simply used to the two-pedal operation, but also because they unconsciously try to maintain their driving posture by holding their left heel as well as their right heel firmly on the floor in response to the change in G (acceleration) during the driving caused by acceleration, deceleration, etc.

When a foot is forced in a state where its entire sole mounts on an accelerator pad projecting toward the driver's side as in Prior Art 2, in other words, when a right foot is forced in a constantly elevated state, the load for the foot to support its own weight exceeds the reduced load to the ankle. Also, since the right foot has no choice but to be positioned on the brake pedal, which is located towards the center of vehicle, the heel will be constantly above the floor and the driver cannot use her/his right foot to maintain her/his posture. For example, when the driver receives a rightward G in a lefthand curve with his/her heel touching the floor, the driver can operate the accelerator by simply using the ankle while holding down the right foot firmly, but in the configuration of Prior Art 2, if the driver applies force in his/her right foot, she/he may unconsciously operate the brake while operating the accelerator, causing a danger. In the first place, the state of the right foot constantly being lifted on the brake pedal during the driving is off the general perception of drivers and this state itself cannot be regarded as psychologically preferable.

Moreover, the prior art have no choice but to have a complex and bulky mechanism. In the configuration of Prior Art 1, since a complex accelerator mechanism consisting of an accelerator wire arm, an accelerator lever, an accelerator pad, etc. exists to the right of the brake pedal, if the foot pressing down on the brake pedal slightly shifts rightward during an emergency full braking to step on the accelerator mechanism by mistake, enough braking may not be achieved, leading to a device failure. In the configuration of Prior Art 2 on the other hand, the brake pedal itself is large in order to rotatably install the accelerator pad in the first place. The large pedal not only tightens the space around the driver's feet to inconvenience the driver when getting in and out of the vehicle, but also compromises the pedal operability and/or operational experience due to the increased inertial weight as well as increasing the risk of hindering the braking operation when some article is dropped on the floor and stuck beneath the pedal. In particular, there was an actual case, in which a driver had a prosthetic left foot and his/her prosthetic foot with no tactile perception interfered with the pedal device with the driver being unaware of it, causing the pedal device to malfunction, and therefore, it is very important to make the pedal device simple and compact in order to prevent such a problem.

### SUMMARY OF THE INVENTION

Considering the above technical problems of the prior art, the purpose of the present invention was devised to solve the following technical challenges; i.e., (1) make the present invention attachable to an existing brake pedal without remodeling it; (2) not to cause a pedal stepping surface to project toward a driver; (3) an accelerator and a brake are operable with the driver's right heel in contact with the floor to reduce the driver's fatigue due to a prolonged operation; (4) upon braking the present invention always operates toward a direction to close the accelerator, and allows some deviation of a pedal-stepping position; and (5) make a configuration of the present invention as inexpensive, compact and simple as possible.

In order to overcome the above challenges, a pedal device described in Claim 1 comprises: a frame consisting of a bracket attachable to an existing brake pedal, and a base projecting rightward from the bracket; an accelerator pad attached to the upper surface of the base so that the accelerator pad is smoothly slidable rightward and leftward through a slide mechanism provided on the upper surface of the base; and a transmission unit for transmitting a position of the accelerator pad to an accelerator device of a vehicle, wherein the base is sloped downward toward the bracket, wherein the accelerator pad is shaped so that its stepping surface is not higher than a stepping surface of the brake pedal when the accelerator pad is at its leftmost position, and wherein the accelerator pad comprises a biasing unit for biasing the accelerator pad leftward. According to such a configuration, the accelerator pad the of the present invention will be disposed on the right side of the existing brake pedal, i.e., at an offset position where an original accelerator pedal, now removed, used to be.

The frame, which is an integration of the bracket and the base, may be structured by joining separate members by welding or bolting, etc., but may be also integrally shaped by bending or pressing a steel material in order to provide deformation resistance and durability against the driver's maximum stepping force upon emergency full braking. Also, the bracket has a structure capable of enclosing and being fastened on a pedal pad of the existing brake pedal so that the bracket covers the pedal pad. Any fastening method may be used, but appropriate fasteners may be bolted to accommodate various shapes and sizes of the brake pedal for different makes of the vehicle.

The slide mechanism is fixed on the upper surface of the base, and supports and holds the accelerator pad so that it slides smoothly rightward and leftward, i.e., along the longitudinal direction of the base without derailing off the slide mechanism. Any mechanism allowing it may be used, but for example, rollers or bearings may be configured to support the bottom surface of the accelerator pad.

The accelerator pad is shaped so that its stepping surface becomes parallel with the stepping surface of the brake pedal, and so that, when the accelerator pad is at its leftmost position on the base, the stepping surface of the accelerator pad will be at the same height as or slightly lower than the stepping surface of the brake pedal. Specifically, by shaping the accelerator pad's cross-section, viewed from the front-back direction, generally sideways trapezoidal with its under surface having a slope accommodating a slope of the base, the accelerator pad may be configured so that it slides smoothly on the base without changing the stepping angle of the accelerator pad, and so that the height of the stepping surface becomes elevated as the accelerator pad moves rightward, i.e., toward the base end. Also, a fringe is preferably provided on the right end of the accelerator pad, wherein an outer side of the driver's right fifth toe will abut the fringe.

The transmission unit is a mechanism for transmitting a left-right displacement of the accelerator pad to an existing accelerator device of a vehicle to continuously control the accelerator aperture. The transmission unit may have any configuration, and for example, by having one end of a wire cable anchored to the accelerator pad and the other end of the wire cable connected to and linked with the accelerator device, transmission unit is configured so that the accelerator aperture is at its maximum when the accelerator pad is at its rightmost position, and the accelerator is fully closed when the accelerator pad is at its leftmost position. Also, a detector may be provided on the frame for mechanically or electronically detecting the accelerator pad position and converting it to an electric signal, wherein the detector may be configured so that it transmits the electric signal to the accelerator device through a wiring cable.

The biasing unit is means for biasing the accelerator pad and returning it to its leftmost position, i.e., the position where the accelerator is fully closed, when the accelerator pad is released. The biasing unit may have any configuration, but for example, it may configured such that the accelerator pad and the bracket are connected via a spring and the accelerator pad is pulled back to its leftmost position by the spring's contraction force. Such a biasing unit may be disposed within the slide mechanism. Also, by providing the fringe on the right end of the accelerator pad, the biasing unit causes the outer side of the driver's right fifth toe to always abut the fringe during driving to thereby enable subtle acceleration work.

Installation, operation and deployment of the pedal device comprising the above configuration will now be described. Firstly, in installation, after an existing accelerator pedal is removed together with its stay, the bracket of the pedal device is attached and fastened to an existing brake pedal, and then, one end of the transmission unit, for example, a wire cable is connected to an existing accelerator mechanism.

During driving, the driver places his/her right foot sole on the stepping surface of the accelerator pad with his/her right heel on the floor, wherein when accelerating, the driver moves the accelerator pad rightward by rotating his/her right toes outward, and wherein when decelerating, the driver moves the accelerator pad leftward by rotating his/her right toes inward.

Upon braking, the brake is deployed by the accelerator pressed down forward. At this time, since the base, on which the accelerator pad slides, is sloped towards the bracket, the forward stepping pressure is converted to a vector towards a lower left direction, forcing the accelerator pad to move leftward. In other words, even if the driver has no intention to move the accelerator pad leftward, simply stepping down the accelerator pad forward will generate the biasing force for closing the accelerator.

Next, the pedal device described in Claim 2 is the pedal device according to Claim 1, wherein the base is provided on the bracket at an angle so that the right end of the base is closer to a driver.

As described above, opening and closing of the accelerator is performed by the driver's rotating her/his right toes outward and inward, respectively, and when those toe rotations are performed as pivoting about the driver's heel on the floor, the toes naturally move along an arc trajectory. Here, since the accelerator pad's sliding direction will be along the arc trajectory of the toe if the base is angled so that its right end becomes closer to the driver, the distance between the accelerator pad and the heel will not increase as the accelerator opens, thus enabling more smooth acceleration operation. Also, during braking, the accelerator pad's sliding direction will be leftward and forward, and the direction of the stepping force to press the accelerator pad down and forward will be converted to a leftward direction, ensuring that the accelerator closes compared to the case when the base is not angled.

According to the above configuration, a pedal device according to the present invention provides superior effects to allow the following compared with the prior art:
(1) Since the pedal device may be attached to an existing brake pedal without remodeling it, the pedal device may be implemented more inexpensively; (2) Since the distance to the stepping surface does not change, the driver's knee position is also unchanged, preventing the increase of the load to the driver's overall leg/foot compared to the prior art; (3) The brake and the accelerator may be operated with the driver's right heel in contact with the floor; Also, unlike in the prior art, the driver can maintain the conventional natural driving posture without placing his/her right foot towards the center of vehicle, thus fatigue from prolonged driving and/or psychological discomfort may be reduced; Moreover, upon left turns, etc., the right foot may also be used to maintain the driver's posture, thus improving the stability of driving posture; (4) By providing angles in the up-down and front-back directions of the base, respectively, biasing force is enhanced toward the direction to close the accelerator upon braking, thereby ensuring the braking; Also, since the accelerator pad and the bracket are integrally attached to the existing brake pedal, the stepping surface of the brake pedal is practically enlarged, thus, further ensuring the braking by allowing the driver to step on anywhere on the brake pedal for braking; and (5) Since the external shape of the pedal device has a compact and simple structure consisting of the frame and the accelerator pad only without exposing any of its device elements outside this external shape, there is little risk of interference with the internal structure of the vehicle, foreign matter getting trapped, or malfunction and/or failure.

### BRIEF DESCRIPTION OF THE DRAWINGS

Fig. 1 is a perspective view of a pedal device according to an embodiment;
Fig. 2 is a plan view of the pedal device according to the embodiment;
Fig. 3 is a front view of the pedal device according to the embodiment;
Fig. 4 is a side view of the pedal device in use, wherein it is attached to an existing brake pedal viewed from its right side;
Fig. 5 is a plan view of the pedal device during acceleration (the accelerator is open);
Fig. 6 is a front view of the pedal device during acceleration (the accelerator is open);
Fig. 7 is a plan view of the pedal device upon braking (the accelerator is closed); and
Fig. 8 is a front view of the pedal device upon braking (the accelerator is closed).

### DETAILED DESCRIPTION OF THE INVENTION

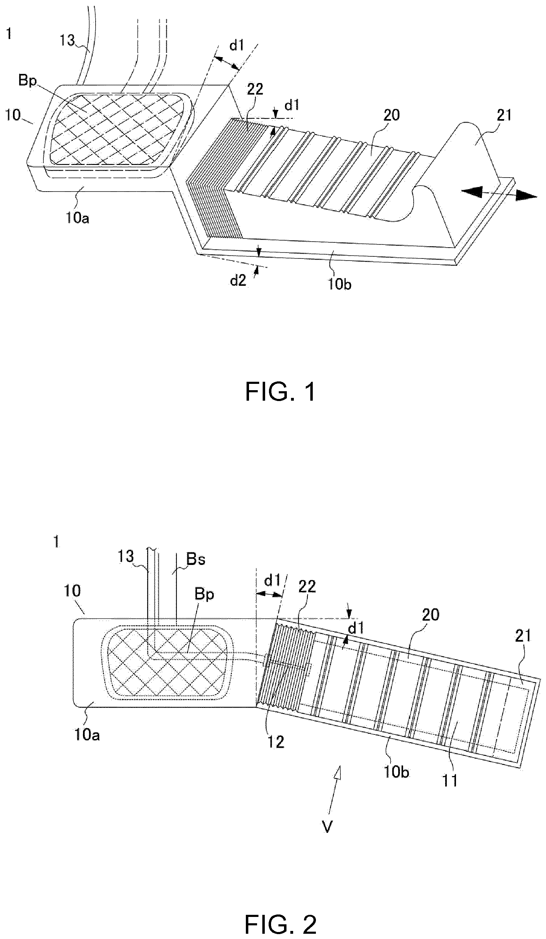

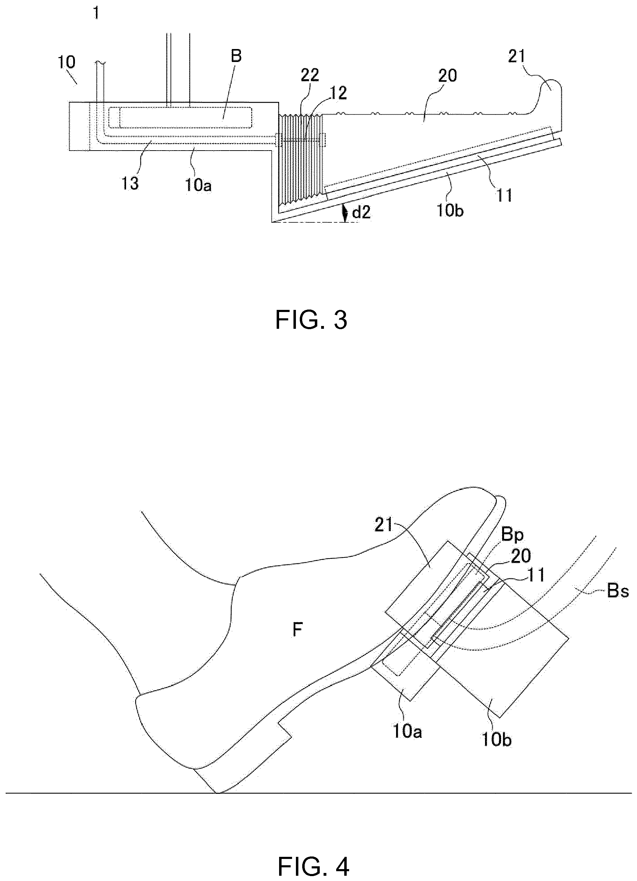

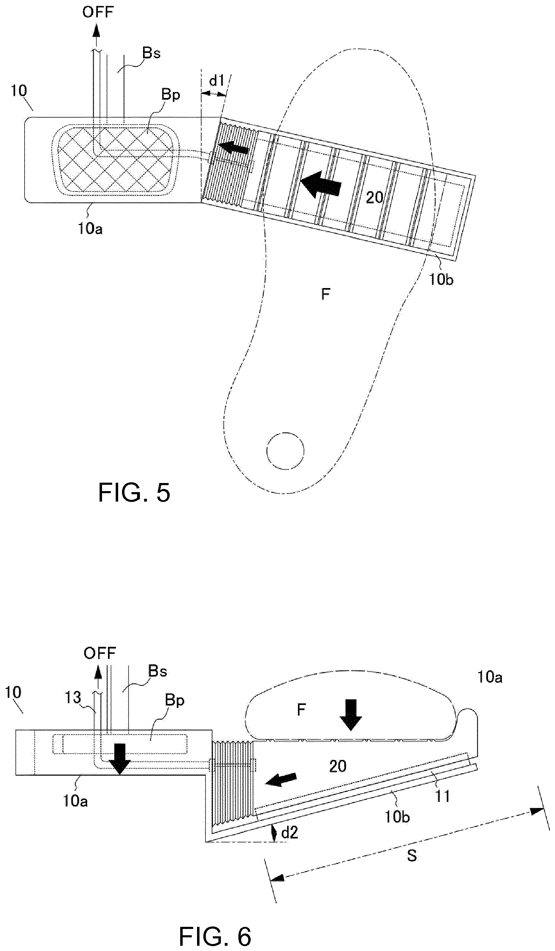

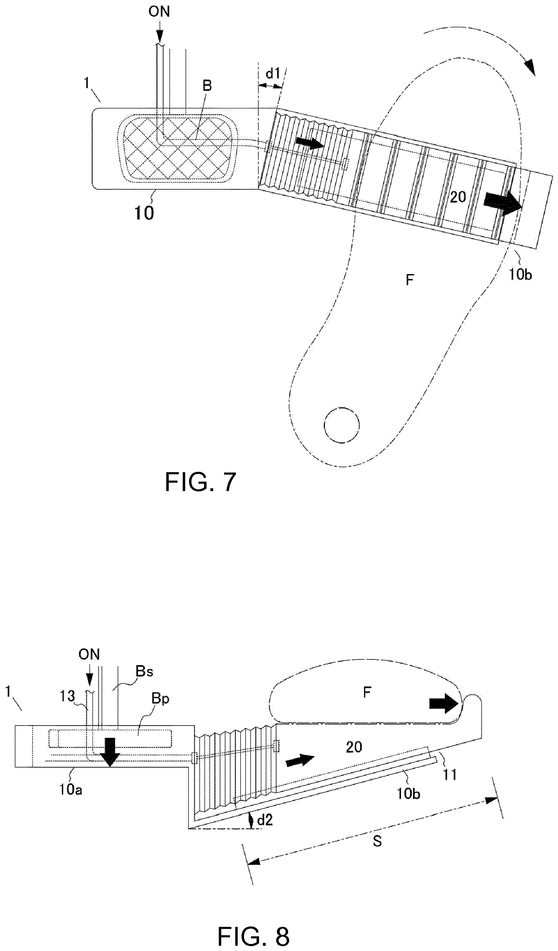

One embodiment of the present invention will be described below based on drawings. Fig. 1 is a perspective view showing an embodiment of a pedal device according to the present invention; Fig. 2 is a plan view of the pedal device; and Fig. 3 is a front view of the pedal device viewed from the direction of an arrow V in Fig. 2. Fig. 4 is a side view of the pedal device in use, attached to a existing brake pedal B, seen from the right side of the pedal device. Also, Fig. 5 to Fig. 8 are diagrams showing operations and actions of the pedal device 1: wherein Fig. 5 is a plan view during acceleration (the accelerator is open); Fig. 6 is a front view during acceleration; Fig. 7 is a plan view in braking (the accelerator is closed); and Fig. 8 is a front view during braking.

The pedal device 1 consists of a frame 10 with a configuration having a generally box-shaped bracket 10a and a base 10b, which is a rectangular plate material, wherein the bracket 10a is attachable to the brake pedal B so that the bracket 10a covers a pedal pad Bp of the brake pedal B, and wherein the right side of the bracket 10a extends downward, and from its lower end, the base 10b projects rightward; an accelerator pad 20 attached to the upper surface of the base 10b so that the accelerator pad 20 is smoothly slidable rightward and leftward, i.e., along the longitudinal axial line of the base 10b through a slide mechanism 11 provided on the upper surface of the base 10b; and a wire cable 12 as means for transmitting a displacement of the accelerator pad 20 to an existing accelerator device (not shown).

Since the right side of the bracket 10a is angled rightward relative to the axial line in the front-back direction by an offset angle d1, the axial line of the accelerator pad 20 sliding direction is also offset by the angle d1 towards the driver. Also, the base 10b is angled upward relative to the upper surface of the bracket 10a by an offset angle d2, and the accelerator pad 20 slides along this slope on the base 10a. The angles d1, d2 may be set arbitrarily with respect to the acceptable sliding distance S of the accelerator pad 20, but are preferably 13° when the acceptable sliding distance is set to 40 mm.

By providing such an offset angle d1, the distance between the driver's heel and the accelerator pad 20 remains constant, allowing smooth operation of ramping up the accelerator when the driver places her/his heel on the floor and rotates her/his toes outward to ramp up the accelerator. Also, by providing the offset angle d2, a forward stepping pressure upon braking will be converted to a vector towards a lower left direction, forcing the accelerator pad 20 to move leftward and generating bias to ramp down the accelerator to thereby ensure the braking.

Viewed from the V direction, the accelerator pad 20 is a generally trapezoidal block tapered toward right, and configured so that its upper surface, which will be a stepping surface, becomes parallel with the upper surface of the bracket 10a when the accelerator pad 20 is attached on the base 10b, wherein a fringe 21 is provided on the right end of the upper surface of the accelerator pad 20 so that an outer side of the driver's right fifth toe will abut the fringe 21. The accelerator pad 20 has a height which allows the stepping surface of the accelerator pad 20 to be lower than the upper surface of the bracket 10a, at least at the left end of the base 10b. Accordingly, the front part of the driver's foot is stopped by the bracket 10a when stepping down upon braking, thus eliminating the risk of the foot stepping off the pedal device 1 unintentionally. Also, as shown in Fig. 4, since the stepping surface of the accelerator pad 20 has the same angle as the stepping surface of the pedal pad Bp of the existing brake pedal B, and since both stepping surfaces have the same distance from the driver's knee, conventional and natural operational experience will be achieved because there will not be space created between the seating surface and the bottom side of the driver's thigh caused by the elevated foot of the driver.

Note that the entirety or at least the stepping surface of the accelerator pad 20 is made of rubber, and the accelerator pad 20 is provided with an indented pattern for preventing slippage. Also, the gap between the left end of the accelerator pad 20 and the bracket 10 is covered with a dust boot 22, which is stretchable according to the movement of the accelerator pad 20, and the dust boot 22 prevents foreign matter and/or dust from entering the gap.

The configuration of the slide mechanism 11 is not shown, but it may be any configuration allowing the accelerator pad 20 to smoothly slide in the left-right direction within the acceptable sliding range S, and the configuration may have, for example, a combination of a rail or rails in the axial direction and rollers or bearings, and stoppers at both ends for restricting the movement of the accelerator pad 20 within the acceptable sliding range S.

One end of the wire cable 12 is fixed at the left end of the accelerator pad 20, and the other end of the wire cable 12 is connected to the existing accelerator device, wherein the movement of the accelerator pad 20 mechanically causes the accelerator device to open or close. The wire cable 12 is provided through inside the bracket 10a along a stay Bs of the brake pedal B and lead out upward so that the wire cable 12 does not interfere with the movement of the pedal device 1 and/or the driver's left foot, wherein the wire cable 12 is covered with a tube 13 inside the bracket 10a and where the wire cable 12 is exposed.

Although a specific configuration of the pedal device according to the present invention has been described, it should be noted that the present invention should not be limited by the above embodiment, that improvements or modifications may be made within the technical idea of the present invention, and that those improvements or modifications fall within the technical scope of the present invention.

The present invention may be applied in that it is attached to an existing brake pedal of various automobiles, etc., wherein the wire cable may be connected and linked with an accelerator device after removing its accelerator pedal. Since the present invention does not require large-scale modification on the vehicle side and it is simple and non-bulky, it may be widely used at a low cost for even light motor vehicles. Also, compared with the conventional one-pedal scheme, the present invention does not significantly change the driver's operability and driving posture, and therefore, it is easier for senior drivers to adapt to the present invention.

## Claims

1. A pedal device, comprising:
a frame consisting of a bracket attachable to an existing brake pedal, and a base projecting rightward from the bracket;
an accelerator pad attached to an upper surface of the base so that the accelerator pad is smoothly slidable rightward and leftward through a slide mechanism provided on the upper surface of the base; and
a transmission unit for transmitting a position of the accelerator pad to an accelerator device of a vehicle,
wherein the base is sloped downward toward the bracket,
wherein the accelerator pad is shaped so that its stepping surface is not higher than a stepping surface of the brake pedal when the accelerator pad is at its leftmost position, and
wherein the accelerator pad comprises a biasing unit for biasing the accelerator pad leftward.

2. The pedal device of Claim 1, wherein the base is provided on the bracket at an angle so that the right end of the base is closer to a driver.
